(19) Europäisches Patentamt / European Patent Office / Office européen des brevets

(11) **EP 1 921 093 A1**

(12) **EUROPEAN PATENT APPLICATION**
published in accordance with Art. 153(4) EPC

(43) Date of publication:
**14.05.2008 Bulletin 2008/20**

(51) Int Cl.:
*C08F 4/656* (2006.01)

(21) Application number: **06783163.6**

(22) Date of filing: **28.08.2006**

(86) International application number:
**PCT/JP2006/317391**

(87) International publication number:
**WO 2007/026903 (08.03.2007 Gazette 2007/10)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **31.08.2005 JP 2005250579**

(71) Applicant: **Toho Catalyst Co., Ltd.**
**Kurobe-shi, Toyama 938-0042 (JP)**

(72) Inventors:
• **HOSAKA, Motoki**
  **Chigasaki-shi, Kanagawa 2538510 (JP)**
• **KONO, Hiroyuki**
  **Chigasaki-shi, Kanagawa 2538510 (JP)**

(74) Representative: **Fiesser, Gerold Michael et al**
**KNH Patentanwälte,**
**Kahlhöfer, Neumann, Herzog, Fiesser,**
**Isartorplatz 8**
**80331 München (DE)**

(54) **SOLID CATALYST COMPONENT FOR OLEFIN POLYMERIZATION, CATALYST AND METHOD FOR PRODUCING OLEFIN POLYMER BY USING SAME**

(57) A solid catalyst component for polymerization of olefins, a catalyst for polymerization of olefins, and a method for producing an olefin polymer are provided. The solid catalyst component (A) is obtained by causing a solid component (a) containing magnesium, titanium, and a halogen atom to come in contact with an organosilicon compound (b) shown by the formula, $[CH_2=CH-(CH_2)_n]_q SiR^1_{4-q}$. A catalyst for polymerization of olefins (B) is formed from an organoaluminum compound shown by the formula $R^2_r AlQ_{3-r}$. A process for producing an olefin polymer comprises polymerizing olefins in the presence of the catalyst. By using the catalyst, a polymer which has high catalyst activity and stereoregularity and is excellent in maintaining activity can be obtained in a high yield.

Figure 1

```
(A) Transition metal component
    (a) Magnesium Compound
       Titanium Conpound
       Electron-Donating Compound ─────────┐ Contact
                                            │
    (b) Organosilicon Compound             │
       [CH₂=CH─(CH₂)ₙ]q  S i  R¹₄₋q ───────┤ Olefin

    (C) Organic Alminum Component
       R²ᵣA l Q₃₋ᵣ
       0 < r ≦ 3
```

**Description**

TECHNICAL FIELD

The present invention relates to a solid catalyst component and a catalyst for polymerization of olefins capable of maintaining high stereoregularity and yield of the polymer, and is excellent in maintaining activity, and to a process for producing olefin polymers using the solid catalyst component or the catalyst.

BACKGROUND OF THE INVENTION

A solid catalyst component containing magnesium, titanium, an electron donor compound, and a halogen as essential components used for polymerization of olefins such as propylene has been known in the art. A number of methods for polymerizing or copolymerizing olefins in the presence of a catalyst for olefin polymerization comprising the above solid catalyst component, an organoaluminum compound, and an organosilicon compound have been proposed. For example, Patent Document 1 (JP-A-57-63310) and Patent Document 2 (JP-A-57-63311) propose a method for polymerizing propylene, in which a catalyst comprising a magnesium compound, a titanium compound, and an organosilicon compound having an Si-O-C bond is used. However, because the method is not necessarily satisfactory for producing highly stereoregular polymers in a high yield, improvement of these methods has been desired.

Patent Document 3 (JP-A-3-234707) discloses a Ziegler-type solid catalyst component for α-olefin polymerization obtained by contacting a solid component containing titanium, magnesium, and halogen as essential components; an organosilicon compound having two or more Si-OR bonds and at least one hydrocarbon residue in which the hydrocarbon group has a secondary or tertiary carbon atom neighboring a silicon atom; a vinyl silane compound; and an organometallic compound. Polymerization of propylene using this solid catalyst component improves the crystallinity of the resulting polymer and catalyst activity. Furthermore, use of an electron donor compound during polymerization may be omitted if this solid catalyst component is used. However, there are problems such as deterioration of the solid catalyst component with time and decrease of activity during polymerization.

There is also a problem of increase of cost due to the complicated manufacturing process involving treatment of two or more organosilicon compounds.

(Patent Document 1) JP-A-57-63310 (Claims)
(Patent Document 2) JP-A-57-63311 (Claims)
(Patent Document 3) JP-A-3-234707 (Claims)

Therefore, an object of the present invention is to provide a solid catalyst component and a catalyst for polymerization of olefins which is capable of maintaining stereoregularity and yield of a polymer, has minimized decrease of catalyst activity during polymerization, and is excellent in maintaining the activity, and a process for producing an olefin polymer using the catalyst component or the catalyst.

SUMMARY OF THE INVENTION

In view of this situation, the inventors have conducted extensive studies. As a result, the inventors have found that a solid catalyst component obtained by contacting a solid component containing magnesium, titanium, and a halogen atom with an organosilicon compound having a specific structure is more suitable as a catalyst for polymerizing olefins as compared with the above-mentioned general catalysts. This finding has led to the completion of the present invention.

Specifically, the present invention provides a solid catalyst component for olefin polymerization containing magnesium, titanium, a halogen atom, an organosilicon compound shown by the following formula (1),

$$[CH_2=CH-(CH_2)_n]_q SiR^1_{4-q} \qquad (1)$$

wherein $R^1$ individually represents a hydrogen atom, an alkyl group having 1 to 20 carbon atoms, a cycloalkyl group, a phenyl group, a vinyl group, or a halogen atom, n is 0 or an integer of 1 to 5, and q is an integer of 1 to 4, provided that when q is 1, at least one of $R^1$s is an alkyl group having 2 to 20 carbon atoms, a cycloalkyl group, a phenyl group, a vinyl group, or a halogen atom, or a polymer of the organosilicon compound.

The present invention also provides a solid catalyst component for olefin polymerization obtained by contacting a solid component (a) containing magnesium, titanium, and a halogen atom with an organosilicon compound (b) shown by the following formula (1),

$$[CH_2=CH-(CH_2)_n]_q SiR^1_{4-q} \qquad (1)$$

wherein $R^1$ individually represents a hydrogen atom, an alkyl group having 1 to 20 carbon atoms, a cycloalkyl group, a phenyl group, a vinyl group, or a halogen atom, n is 0 or an integer of 1 to 5, and q is an integer of 1 to 4, provided that when q is 1, at least one of $R^1$s is an alkyl group having 2 to 20 carbon atoms, a cycloalkyl group, a phenyl group, a vinyl group, or a halogen atom.

The present invention further provides a catalyst for olefin polymerization formed of the solid catalyst component and an organoaluminum compound shown by the following formula (2),

$$R^2_r AlQ_{3-r} \qquad (2)$$

wherein $R^2$ represents an alkyl group having 1 to 4 carbon atoms, Q represents a hydrogen atom or a halogen atom, and r represents a real number satisfying the formula $0 < p \leq 3$.

Moreover, the present invention provides a process for producing an olefin polymer comprising polymerizing an olefin in the presence of the catalyst for olefin polymerization.

BRIEF DESCRIPTION OF THE DRAWING

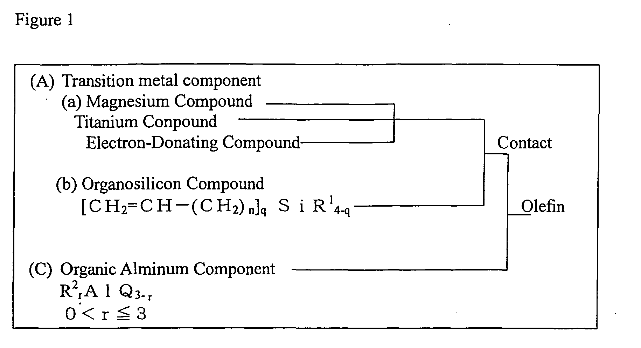

Figure 1 is a flowchart showing a process for preparing the catalyst component and polymerization catalyst of the present invention.

BEST MODE FOR CARRYING OUT THE INVENTION

The solid catalyst component (A) (hereinafter referred to from time to time as "component (A)") may be obtained by contacting a solid component (a) (hereinafter referred to from time to time as "component (a)") containing magnesium, titanium, and a halogen atom with an organosilicon compound (b) (hereinafter referred to from time to time as "compound (b)") shown by the above formula (1).

The solid component (a) may further contain an electron donor compound in addition to magnesium, titanium, and a halogen atom. The solid component (a) may be obtained by contacting, for example, a magnesium compound (i) (hereinafter referred to from time to time as "component (i)") with a titanium compound (ii) (hereinafter referred to from time to time as "component (ii)") and an electron donor compound (iii) (hereinafter referred to from time to time as "component (iii)"). Also, the solid component (a) may be obtained by contacting an organic solvent in addition to the component (i), the component (ii), and the component (iii).

As the magnesium compound (i) used for preparing the solid component, magnesium dihalide, dialkyl magnesium, alkyl magnesium halide, dialkoxymagnesium, diaryloxymagnesium, alkoxymagnesium halide, fatty acid magnesium, and the like can be given. Of these magnesium compounds, magnesium dihalide, a mixture of magnesium dihalide and dialkoxymagnesium, and dialkoxymagnesium, particularly dialkoxymagnesium, are preferable. As specific examples, dimethoxymagnesium, diethoxymagnesium, dipropoxymagnesium, dibutoxymagnesium, ethoxymethoxymagnesium, ethoxypropoxymagnesium, and butoxyethoxymagnesium can be given. Of these, diethoxymagnesium is particularly preferable.

Also, the dialkoxymagnesium may be obtained by reacting metallic magnesium with an alcohol in the presence of a halogen-containing organic metal compound or the like. The dialkoxymagnesium may be used alone or in combination or two or more.

The dialkoxymagnesium used is preferably in the form of granules or a powder and either amorphous or spherical in configuration. For example, when a spherical dialkoxymagnesium is used, a polymer powder having a better particle shape and a narrower particle size distribution can be obtained. This improves handling operability of the produced polymer powder during the polymerization operation and eliminates problems such as clogging of the filter or the like in the polymer separation device caused by fine particles contained in the produced polymer powder.

The spherical dialkoxymagnesium needs not necessarily be completely spherical, but may be oval or potato-shaped. Specifically, the particles may have a ratio (L/W) of the major axis diameter (L) to the minor axis diameter (W) usually of 3 or less, preferably of 1 to 2, and more preferably of 1 to 1.5.

Dialkoxymagnesium with an average particle size from 1 to 200 $\mu$m can be used. A more preferable average particle size is 5 to 150 $\mu$m. In the case of spherical dialkoxymagnesium, the average particle size is usually from 1 to 100 $\mu$m, preferably from 5 to 80 $\mu$m, and more preferably from 10 to 60 $\mu$m. A powder having a narrow particle size distribution with a small content of fine powder and coarse powder is preferably used. Specifically, the content of particles with a diameter of 5 $\mu$m or less should be 20% or less, and preferably 10% or less. On the other hand, the content of particles with a diameter of 100 $\mu$m or more should be 10% or less, and preferably 5% or less. Moreover, the particle size distribution represented by (D90/D10), wherein D90 is a particle size of 90% of the integrated particle size and D 10 is a particle size of 10% of the integrated particle size, is 3 or less, and preferably 2 or less.

Methods for producing such spherical dialkoxymagnesium are described in, for example, JP-A-58-4132, JP-A-62-51633, JP-A-3-74341, JP-A-4-368391, and JP-A-8-73388.

The titanium compound (ii) used for preparing of the solid component (a) is one or more compounds selected from the group consisting of tetravalent titanium halides shown by the formula $Ti(OR^3)_nX_{4-n}$, wherein $R^3$ is an alkyl group having 1 to 4 carbon atoms, X is a halogen atom, and n is an integer of 0 to 4, and alkoxytitanium halides.

Specific examples include, as titanium halides, titanium tetrahalides such as titanium tetrachloride, titanium tetrabromide, and titanium tetraiodide and, as alkoxytitanium halides, methoxytitanium trichloride, ethoxytitanium trichloride, propoxytitanium trichloride, n-butoxytitanium trichloride, dimethoxytitanium dichloride, diethoxytitanium dichloride, dipropoxytitanium dichloride, di-n-butoxytitanium dichloride, trimethoxytitanium chloride, triethoxytitanium chloride, tripropoxytitanium chloride, and tri-n-butoxytitanium chloride. Of these, titanium tetrahalides are preferable, with titanium tetrachloride being particularly preferable. These titanium compounds may be used either individually or in combination of two or more.

The electron donor compound (iii) used for preparing the solid component (a) is an organic compound containing an oxygen atom or a nitrogen atom. Alcohols, phenols, ethers, esters, ketones, acid halides, aldehydes, amines, amides, nitriles, isocyanates, and organosilicon compounds containing an Si-O-C bond or an Si-N-C bond can be given as examples.

As specific examples, alcohols such as methanol, ethanol, n-propanol, 2-ethylhexanol; phenols such as phenol and cresol; ethers such as methyl ether, ethyl ether, propyl ether, butyl ether, amyl ether, diphenyl ether, 9,9-bis(methoxymethyl)fluorene, 2-isopropyl-2-iso-pentyl-1,3-dimethoxypropane; monocarboxylic acid esters such as methyl formate, ethyl acetate, vinyl acetate, propyl acetate, octyl acetate, cyclohexyl acetate, ethyl propionate, ethyl butylate, ethyl benzoate, propyl benzoate, butyl benzoate, octyl benzoate, cyclohexyl benzoate, phenyl benzoate, methyl p-toluate, ethyl p-toluate, methyl anisate, and ethyl anisate; dicarboxylic acid diesters such as diethyl malonate, dipropyl malonate, dibutyl malonate, diisobutyl malonate, dipentyl malonate, dineopentyl malonate, diethyl isopropylbromomalonate, diethyl butylbromomalonate, diethyl diisobutylbromomalonate, diethyl diisopropylinalonate, diethyl dibutylmalonate, diethyl diisobutylmalonate, diethyl diisopentylmalonate, diethyl isopropylbutylmalonate, dimethyl isopropylisopentylmalonate, diethyl bis(3-chloro-n-propyl)malonate, diethyl bis(3-bromo-n-propyl)malonate, diethyl maleate, dibutyl maleate, dimethyl adipate, diethyl adipate, dipropyl adipate, dibutyl adipate, diisodecyl adipate, dioctyl adipate, phthalic acid diesters, and phthalic acid diester derivatives; ketones such as acetone, methyl ethyl ketone, methyl butyl ketone, acetophenone, and benzophenone; acid chlorides such as phthalic acid dichloride and terephthalic acid dichloride; aldehydes such as acetaldehyde, propionaldehyde, octylaldehyde, and benzaldehyde; amines such as methylamine, ethylamine, tributylamine, piperidine, aniline, and pyridine; amides such as olefin acid amide and stearic acid amide; nitriles such as acetonitrile, benzonitrile, and tolylnitrile; isocyanates such as methyl isocyanate and ethyl isocyanate; organosilicon compounds containing an Si-O-C bond such as phenylalkoxysilane, alkylalkoxysilane, phenylalkylalkoxysilane, cycloalkylalkoxysilane, and cycloalkylalkylalkoxysilane, and organosilicon compounds having an Si-N-C bond such as bis(alkylamino)dialkoxysilane, bis(cycloalkylamino)dialkoxysilane, alkyl(alkylamino)dialkoxysilane, dialkylaminotrialkoxysilane, and cycloalkylaminotrialkoxysilane can be given.

Among the above electron donor compounds, the esters, particularly aromatic dicarboxylic acid diesters, are preferably used. Phthalic acid diester and phthalic acid diester derivatives are ideal compounds. Specific examples of the phthalic acid diester include the following compounds: dimethyl phthalate, diethyl phthalate, di-n-propyl phthalate, diisopropyl phthalate, di-n-butyl phthalate, diisobutyl phthalate, ethylmethyl phthalate, methylisopropyl phthalate, ethyl (n-propyl) phthalate, ethyl(n-butyl) phthalate, ethyl isobutyl phthalate, di-n-pentyl phthalate, diisopentyl phthalate, dineopentyl phthalate, dihexyl phthalate, di-n-heptyl phthalate, di-n-octyl phthalate, bis(2,2-dimethylhexyl) phthalate, bis(2-ethylhexyl) phthalate, di-n-nonyl phthalate, diisodecyl phthalate, bis(2,2-dimethylheptyl) phthalate, n-butyl isohexyl phthalate, n-butyl(2-ethylhexyl) phthalate, n-pentyl hexyl phthalate, n-pentyl isohexyl phthalate, isopentyl(heptyl) phthalate, n-pentyl(2-ethylhexyl) phthalate, n-pentyl-isononyl phthalate, isopentyl(n-decyl) phthalate, n-pentyl undecyl phthalate, isopentyl isohexyl phthalate, n-hexyl(2,2-dimethylhexyl) phthalate, n-hexyl isononyl phthalate, n-hexyl(n-decyl) phthalate, n-heptyl(2-ethylhexyl) phthalate, n-heptyl isononyl phthalate, n-heptyl(neodecyl) phthalate, and 2-ethylhexyl isononyl phthalate. One or more of these compounds can be used.

As examples of the phthalic acid diester derivatives, compounds in which one or two hydrogen atoms on the benzene ring to which the two ester groups of the phthalic diesters bond are replaced with an alkyl group having 1 to 5 carbon atoms or a halogen atom such as a chlorine atom, a bromine atom, and a fluorine atom can be given. The solid catalyst component prepared by using the phthalic acid diester derivatives as an electron donor compound can particularly contribute to a melt flow rate increase with a given amount of hydrogen by increasing hydrogen response, that is, can increase the melt flow rate of polymer by using the same or a smaller amount of hydrogen during the polymerization. As specific examples, dineopentyl 4-methylphthalate, dineopentyl 4-ethylphthalate, dineopentyl 4,5-dimethylphthalate, dineopentyl 4,5-diethylphthalate, diethyl 4-chlorophthalate, di-n-butyl 4-chlorophthalate, dineopentyl 4-chlorophthalate, diisobutyl 4-chlorophthalate, diisohexyl 4-chlorophthalate, diisooctyl 4-chlorophthalate, diethyl 4-bromophthalate, di-n-butyl 4-bromophthalate, dineopentyl 4-bromophthalate, diisobutyl 4-bromophthalate, diisohexyl 4-bromophthalate, diisooctyl 4-bromophthalate, diethyl 4,5-dichlorophthalate, di-n-butyl 4,5-dichlorophthalate, diisohexyl 4,5-dichlorophthalate, and diisooctyl 4,5-dichlorophthalate can be given. Among these, dineopentyl 4-bromophthalate, di-n-butyl 4-bromophthalate, and diisobutyl 4-bromophthalate are preferable.

The above ester compounds are also preferably used in combination of two or more. In this instance, the esters are preferably combined so that the total carbon atoms in the alkyl group possessed by one ester may differ by four or more from that possessed by another ester.

In order to improve easiness of operation and performance of the resulting solid catalyst component, it is desired to contact the components (i), (ii), and (iii) in the presence of an organic solvent even though these components may be contacted directly without a solvent. As an organic solvent, aliphatic hydrocarbons and alicyclic hydrocarbons such as hexane, cyclohexane, heptane, octane, and decane, aromatic hydrocarbons such as toluene, ethylbenzene, and xylene, halogenated hydrocarbons such as chlorobenzene, dichlobenzene, and tetrachloroethane, can be given. Of these, the aromatic hydrocarbon with a boiling point of 50 to 150°C such as toluene, xylene, and ethylbenzene are preferably used. These solvents can be used either individually or in combination of two or more.

As a particularly preferable method for preparing the solid component (a) of the present invention, a method of preparing a suspension of the component (i), the component (iii), and an aromatic hydrocarbon compound (iv) (hereinafter referred to from time to time as "component (iv)") having a boiling point of 50 to 150°C, causing this suspension to contact with a mixed solution made from the component (ii) and the component (iv), and reacting the mixture can be given.

In the preparation of the solid component (a) of the present invention, in addition to the above components, a polysiloxane (v) (hereinafter may be simply referred to as "component (v)") can be preferably used to improve the stereoregularity or crystallinity of the formed polymer and to reduce the amount of fine polymer particles. Polysiloxanes are polymers having a siloxane bond (-Si-O bond) in the main chain and are generally referred to as silicon oil. The polysiloxanes used in the present invention are chain-structured, partially hydrogenated, cyclic, or modified polysiloxanes which are liquid or viscous at normal temperatures with a viscosity at 25°C in the range of 0.02 to 100 cm$^2$/s (2 to 10,000 cSt).

As examples of the chain-structured polysiloxanes, dimethylpolysiloxane and methylphenylpolysiloxane can be given; as examples of the partially hydrogenated polysiloxanes, methyl hydrogen polysiloxanes with a hydrogenation degree of 10 to 80% can be given; as examples of the cyclic polysiloxanes, hexamethylcyclotrisiloxane, octamethylcyclotetrasiloxane, decamethylcyclopentansiloxane, 2,4,6-trimethylcyclotrisiloxane, and 2,4,6,8-tetramethylcyclotetrasiloxane can be given; as examples of the modified polysiloxane, higher fatty acid group-substituted dimethylsiloxane, epoxy group-substituted dimethylsiloxane, and polyoxyalkylene group-substituted dimethylsiloxane can be given. Of these, decamethylcyclopentasiloxane and dimethylpolysiloxane are preferable, with decamethylcyclopentasiloxane being particularly preferable.

The solid component (a) can be prepared by causing the above components (i), (ii), and (iii), and, as required, the component (iv) or component (v) to come in contact with each other. The method of preparing the solid component (a) will now be described in detail. A specific example of the method for preparing the solid component comprises suspending the magnesium compound (i) in the tetravalent titanium halide (ii) or the aromatic hydrocarbon compound (iv), and causing the electron donor compound (iii) such as a phthalic acid diester and, as required, the tetravalent titanium halide (ii) to come in contact with the suspension. In this method, the solid component (a) in the form of spherical particles with a sharp particle size distribution can be obtained by using a spherical magnesium compound. A solid component (aa) in the form of spherical particles with a sharp particle size distribution can also be obtained without using a spherical magnesium compound if particles are formed by a spray dry method in which a solution or a suspension liquid is sprayed and dried using a sprayer, for example.

These components are caused to come in contact with each other in a vessel equipped with a stirrer in an inert gas atmosphere, from which water and the like have been removed, while stirring. The contact temperature, which is a temperature at which these components are caused to come into contact with each other, may be either the same as or different from the reaction temperature. When the components are caused to come into contact with each other by stirring for preparing the mixture or are dispersed or suspended for a denaturing treatment, the components may be stirred at a comparatively low temperature of around room temperature. A temperature in a range from 40 to 130°C is preferable for obtaining the product by reaction after contact. The reaction does not proceed sufficiently at a reaction temperature below 40°C, resulting in a solid catalyst component with inadequate properties. On the other hand, control of the reaction becomes difficult at a temperature above 130°C due to vaporization of the solvent and the like. The reaction time is one minute or more, preferably ten minutes or more, and still more preferably 30 minutes or more.

As preferable processes for preparing the solid component (a) of the present invention, a process comprising suspending the component (i) in the component (iv), causing the resulting suspension to come in contact with the component (ii), then the component (iii) and component (iv), and causing these components to react, and a process comprising suspending the component (i) in the component (iv), causing the resulting suspension liquid to come in contact with the component (iii), then with the component (ii), and causing these components to react can be given. The solid component (a) thus prepared may be caused to come in contact with the component (ii) or the components (ii) and (iii) once again or two or more times to improve the performance of the ultimate solid catalyst component. This contacting step is preferably carried out in the presence of the aromatic hydrocarbon compound (iv).

As a preferable method for preparing the solid component (a) of the present invention, a method of preparing a suspension liquid of the component (i), the component (iii), and the aromatic hydrocarbon compound (iv) having a boiling point of 50 to 150°C, causing this suspension liquid to come in contact with a mixed solution of the component (ii) and the component (iv), and reacting the mixture can be given.

As a preferable example of the method for preparing the solid component (a), the following method can be given. A suspension is prepared from the above component (i), component (iii), and an aromatic hydrocarbon compound (iv) having a boiling point of 50 to 150°C. A mixed solution is prepared from the above component (iii) and the aromatic hydrocarbon compound (iv) having a boiling point of 50 to 150°C. The above-described suspension liquid is added to this solution. The resulting mixture is heated and reacted (a primary reaction). After the reaction, the solid product is washed with a hydrocarbon compound which is liquid at normal temperature to obtain a solid product. Furthermore, an additional component (ii) and the aromatic hydrocarbon compound (iv) having a boiling point of 50 to 150°C may be caused to come in contact with the washed solid product at a temperature of -20 to 100°C. The temperature is raised to react the mixture (a secondary reaction), and after the reaction, the reaction mixture is washed with a hydrocarbon compound which is liquid at normal temperatures one to ten times to obtain the solid component (a).

Based on the above description, a particularly preferable process for preparing the solid component (a) comprises suspending the dialkoxymagnesium compound (i) in the aromatic hydrocarbon compound (iv) having a boiling point in the range of 50 to 150°C, causing the tetravalent titanium halide (ii) to contact the suspension, and reacting the mixture. In this instance, one or more electron donor compounds (iii) such as phthalic acid diester are caused to come in contact with the suspension at a temperature from -20°C to 130°C, either before or after the tetravalent titanium halide compound (ii) is contacted, then optionally the component (v) is contacted and reacted, to obtain a solid product (1). In this instance, it is desirable to carry out an aging reaction at a low temperature either before or after the above one or more electron donor compounds are caused to come in contact with the suspension liquid. After washing the solid product (1) with a hydrocarbon compound which is liquid at normal temperatures (intermediate washing), the tetravalent titanium halide (ii) is again caused to come contact and react with the solid product (1) in the presence of the aromatic hydrocarbon compound at a temperature of -20 to 100°C to obtain a solid product (2). As required, the intermediate washing and the reaction may be further repeated several times. Subsequently, the solid product (2) is washed with a liquid hydrocarbon compound by decantation at an ordinary temperature to obtain the solid component (a).

The ratio of the components used for the preparation of the solid component (a) cannot be generically defined, because such a ratio varies according to the method of preparation employed. For example, the tetravalent titanium halide (ii) is used in an amount from 0.5 to 100 mol, preferably from 0.5 to 50 mol, still more preferably from 1 to 10 mol; the electron donor compound (iii) is used in an amount from 0.01 to 10 mol, preferably from 0.01 to 1 mol, and still more preferably from 0.02 to 0.6 mol; the aromatic hydrocarbon compound (iv) is used in an amount from 0.001 to 500 mol, preferably from 0.001 to 100 mol, and still more preferably from 0.005 to 10 mol; and the polysiloxane (v) is used in an amount of from 0.01 to 100 g, preferably from 0.05 to 80 g, and still more preferably from 1 to 50 g, for one mol of the magnesium compound (i).

Although there are no specific limitations to the amounts of titanium, magnesium, halogen atoms, and electron donor compounds in the solid component (a), the content of titanium is from 1.0 to 8.0 wt%, preferably from 2.0 to 8.0 wt%, and more preferably from 3.0 to 8.0 wt%; the content of magnesium is from 10 to 70 wt%, preferably from 10 to 50 wt%, more preferably from 15 to 40 wt%, and particularly preferably from 15 to 25 wt%; the content of halogen atoms is from 20 to 90 wt%, preferably from 30 to 85 wt%, more preferably from 40 to 80 wt%, and particularly preferably from 45 to 75 wt%; and the total amount of electron donor compounds is from 0.5 to 30 wt%, preferably from 1 to 25 wt%, and particularly preferably from 2 to 20 wt%.

As an organosilicon compound (b) (hereinafter referred to from time to time simply as "component (b)") which forms the solid catalyst component for olefin polymerization of the present invention, any compound shown by the above formula (1) can be used without particular limitation. As specific examples, alkenyl group-containing phenylsilane, alkenyl group-containing alkylsilane halide, and alkenyl group-containing silane halide can be given. In the formula (1), a methyl group, an ethyl group, or a chlorine atom is preferable as $R^1$, q is preferably 2 or 3 (dialkenylsilane or trialkenylsilane), and n is preferably 0 (vinylsilane), 1 (allylsilane), or 2 (3-butenylsilane). When q is 2 or more, the alkenyl group may be the same or different.

Preferable examples of the organosilicon compound (b) include vinyltrimethylsilane, vinyltriethylsilane, divinyldimethylsilane, divinyldiethylsilane, trivinylmethylsilane, trivinylethylsilane, vinylmethyldichlorosilane, vinyltrichlorosilane, vinyltribromosilane, allyltriethylsilane, allyltrivinylsilane, allylmethyldivinylsilane, allyldimethylvinylsilane, allylmethyldichlorosilane, allyltrichlorosilane, allyltribromosilane, diallyldimethylsilane, diallyldiethylsilane, diallyldivinylsilane, diallylmethylvinylsilane, diallylmethylchlorosilane, diallyldichlorosilane, diallyldibromosilane, triallylmethylsilane, triallylethylsilane, triallylvinylsilane, triallylchlorosilane, triallylbromosilane, tetraallylsilane, di-3-butenylsilanedimethylsilane, di-3-butenylsilanediethylsilane, di-3-butenyldilanedivinylsilane, di-3-butenylsilanemethylvinylsilane, di-3-butenylsilanemethylchlorosilane, di-3-butenylsilanedichlorosilane, diallyldibromosilane, triallylmethylsilane, tri-3-butenylsilaneethylsilane, tri-3-butenylsilanevinylsilane, tri-3-butenylsilanechlorosilane, tri-3-butenylsilanebromosilane, and tetra-3-butenylsilanesilane. Of these, divinyldiethylsilane, allyldimethylvinylsilane, diallyldimethylsilane, triallylmethylsilane, and di-3-butenylsilanedimethylsilane are particularly preferable. These compounds may be used either individually or in combination of two or more as the organosilicon compound (b).

<Preparation of solid catalyst component (A)>

The solid catalyst component (A) of the present invention is obtained by causing the component (b) to come in contact with the solid component (a). To ensure easy operation, the components (a) and (b) are caused to come in contact with each other in the presence of an inert solvent. As an inert solvent, aliphatic hydrocarbons and alicyclic hydrocarbons such as hexane, cyclohexane, heptane, octane, and decane; aromatic hydrocarbons such as toluene, ethylbenzene, and xylene; halogenated hydrocarbons such as chlorobenzene, dichlorobenzene, and tetrachloroethane; and silicon oil can be given. Of these, the aromatic hydrocarbon with a boiling point of 50 to 150°C such as toluene, xylene, and ethylbenzene are preferably used. These inert solvents can be used either individually or in combination of two or more. After contacting each component as mentioned above, the mixture is washed with an inert solvent such as heptane to remove unnecessary components.

When preparing the solid catalyst component (A) in the present invention, an organoaluminum compound such as triethylaluminum mentioned in the Patent Document 3 (JP-A-3-234707) is not used when contacting the component (a) and the component (b). Specifically, the known solid catalyst components are prepared by contacting a solid component containing magnesium and titanium with an organosilicon compound, then with an organoaluminum compound, and causing these components to react, followed by washing. On the other hand, the solid catalyst component of the present invention is obtained by only causing the component (b) to come in contact with the component (a). If required, the reacted component may be washed with an inert organic solvent and dried, but the solid catalyst component suspended in an organic solvent containing residue of free component (b) may be used for olefin polymerization without washing.

The ratio of each component used is not specifically limited inasmuch as such a ratio does not influence the effect of the present invention. Usually, the component (b) is used in an amount of 0.1 to 5 mol, and preferably 0.5 to 2 mol per one mol of titanium atom in the component (a).

The temperature at which the components are caused to come in contact is -10°C to 150°C, preferably 0°C to 100°C, and particularly preferably 20°C to 80°C. The contact is carried out for 1 minute to 10 hours, preferably for 10 minutes to 5 hours, and particularly preferably for 30 minutes to 2 hours. The component (b) may polymerize according to the conditions under which the component (a) and the component (b) are caused to come in contact, thereby producing a polymer. When the temperature is 30°C or more, the component (b) starts to polymerize. A part or the whole of the component (b) becomes a polymer and improves crystal properties and catalytic activity of the resulting olefin polymer.

In the preparation of the solid catalyst component (A) by contacting the components (a) and (b), in addition to the above components, a polysiloxane (e) (hereinafter may be simply referred to as "component (e)") may be preferably used to prevent deterioration of the solid catalyst component, catalyst activity, deterioration with time, and decrease of crystallinity of the formed polymer. The polysiloxane (e) may be the same as the component (v) which is the optional component of the solid component (a). Preferably, dimethylpolysiloxane, hexamethylcyclotrisiloxane, octamethylcyclotetrasiloxane, decamethylcyclopentansiloxane, 2,4,6-trimethylcyclotrisiloxane, and 2,4,6,8-tetramethylcyclotetrasiloxane are used.

Furthermore, chlorides such as titanium tetrachloride, titanium trichloride, silicon tetrachloride, and aluminum trichloride may be added in addition to the components (a) and (b).

The solid catalyst component (A) of the present invention contains magnesium, titanium, a halogen atom, and an organosilicon compound shown by the above formula (1) or a polymer thereof. The solid catalyst component (A) of the present invention may further contain an electron donor compound. A polymer of the organosilicon compound shown by the formula (1) is a polymer which is polymerized by unbonding one of the double bonds (vinyl group) between two carbon atoms in the formula (1). The polymer includes an oligomer having a polymerization degree of approximately 2 to 20 (a low molecular weight polymer) and a polymer with a polymerization degree of more than 20. Therefore, the solid catalyst component (A) of the present invention may contain both a monomer of the organosilicon compound and a polymer including an oligomer. The organosilicon compound shown by the formula (1) in the solid catalyst component (A) of the present invention or a polymer thereof may be confirmed by a known analytical method. The same compounds as described above may be used as the organosilicon compound shown by the above formula (1) and the electron donor compound in the solid catalyst component (A) of the present invention.

The solid catalytic component (A) of the present invention contains magnesium, titanium, a halogen atom, and the component (b) or the polymer of the component (b). The content of magnesium is from 10 to 70 wt%, and preferably from 15 to 40 wt%; the content of titanium is from 1.0 to 8.0 wt%, and preferably from 1.5 to 6.0 wt%; the content of the halogen atom is from 20 to 85 wt%, and preferably from 40 to 80 wt%; and the content of the component (b), as a silicon atom, is from 0.1 to 10 wt%, preferably from 0.5 to 5 wt% and more preferably from 1 to 3 wt%.

If the solid catalyst component (A) is suspended in an organic solvent containing residue of free component (b), the solid catalyst component (A) may be used for olefin polymerization as is. In this case, the polymerization is carried out by forming a polymerization catalyst with the organoaluminum compound (B) and, where necessary, an external electron donor compound such as an organosilicon compound. When forming this polymerization catalyst, separating the solid by washing is not necessary. Olefins coexist and olefin polymerization is started at the same time as the components are contacted with each other in the polymerization system.

As the organoaluminum compound (B) used for forming the catalyst for olefin polymerization of the present invention (hereinafter may be simply referred to as "component (B)"), any compound shown by the above formula (2) can be used without particular limitation. An ethyl group and an isobutyl group are preferable as $R^2$, a hydrogen atom, a chlorine atom, and a bromine atom are preferable as Q, and r is preferably an integer of 2 or 3, and particularly preferably 3. As specific examples of such an organoaluminum compound (B), triethylaluminum, diethylaluminum chloride, triisobutylaluminum, diethylaluminum bromide, and diethylaluminum hydride can be given. These compounds may be used either individually or in combination of two or more. Triethylaluminum and triisobutylaluminum are preferably used.

In addition to the above components (A) and (B), an external electron donor compound (C) (hereinafter referred to from time to time simply as "component (C)") may be used for preparing the catalyst for polymerization of olefins of the present invention. The component (C) is an organic compound containing an oxygen atom or a nitrogen atom. Alcohols, phenols, ethers, esters, ketones, acid halides, aldehydes, amines, amides, nitriles, isocyanates, and organosilicon compounds containing an Si-O-C bond can be given as examples.

As specific examples, alcohols such as methanol, ethanol, n-propanol, 2-ethylhexanol; phenols such as phenol and cresol; ethers such as methyl ether, ethyl ether, propyl ether, butyl ether, amyl ether, diphenyl ether, 9,9-bis(methoxymethyl)fluorene, 2-isopropyl-2-iso-pentyl-1,3-dimethoxypropane; monocarboxylic acid esters such as methyl formate, ethyl acetate, vinyl acetate, propyl acetate, octyl acetate, cyclohexyl acetate, ethyl propionate, ethyl butylate, methyl benzoate, ethyl benzoate, propyl benzoate, butyl benzoate, octyl benzoate, cyclohexyl benzoate, phenyl benzoate, ethyl p-methoxybenzoate, ethyl p-ethoxybenzoate, methyl p-toluate, ethyl p-toluate, methyl anisate, and ethyl anisate; dicarboxylic acid esters such as diethyl malonate, dibutyl malonate, dimethyl adipate, diethyl adipate, dipropyl adipate, dibutyl adipate, diisodecyl adipate, dioctyl adipate, dimethyl phthalate, diethyl phthalate, dipropyl phthalate, dibutyl phthalate, dipentyl phthalate, dihexyl phthalate, diheptyl phthalate, dioctyl phthalate, dinonyl phthalate, didecyl phthalate; ketones such as acetone, methyl ethyl ketone, methyl butyl ketone, acetophenone, and benzophenone; acid halides such as phthalic acid dichloride and terephthalic acid dichloride; aldehydes such as acetaldehyde, propionaldehyde, octylaldehyde, and benzaldehyde; amines such as methylamine, ethylamine, tributylamine, piperidine, aniline, and pyridine; amides such as olefin acid amide and stearic acid amide; nitriles such as acetonitrile, benzonitrile, and tolunitrile; and isocyanates such as methyl isocyanate and ethyl isocyanate can be given. Among these, monocarboxylic acid esters such as ethyl benzoate, ethyl p-methoxybenzoate, ethyl p-ethoxybenzoate, methyl p-toluate, ethyl p-toluate, methyl anisate, and ethyl anisate are preferable.

Also, an organosilicon compound (C) shown by the following formula (3) is preferably used;

$$R^4{}_pSi(OR^5)_{4-p} \qquad (3)$$

wherein $R^4$ individually represents an alkyl group having 1 to 12 carbon atoms, a cycloalkyl group, a phenyl group, a vinyl group, an allyl group, or an aralkyl group, $R^5$ individually represents an alkyl group having 1 to 4 carbon atoms, a cycloalkyl group, a phenyl group, a vinyl group, an allyl group, or an aralkyl group, and p is a real number satisfying $0 \leq p \leq 3$.

As examples of such organosilicon compounds, a phenylalkoxysilane, an alkylalkoxysilane, a phenylalkylalkoxysilane, a cycloalkylalkoxysilane, and a cycloalkylalkylalkoxysilane can be given.

The following compounds can be given as specific examples of such organosilicon compounds: trimethylmethoxysilane, trimethylethoxysilane, tri-n-propylmethoxysilane, tri-n-propylethoxysilane, tri-n-butylmethoxysilane, tri-isobutylmethoxysilane, tri-t-butylmethoxysilane, tri-n-butylethoxysilane, tricyclohexylmethoxysilane, tricyclohexylethoxysilane, cyclohexyldimethylinethoxysilane, cyclohexyldiethylmethoxysilane, cyclohexyldiethylethoxysilane, dimethyldimethoxysilane, dimethyldiethoxysilane, di-n-propyldimethoxysilane, di-iso-propyldimethoxysilane, di-n-propyldiethoxysilane, di-iso-propyldiethoxysilane, di-n-butyldimethoxysilane, di-iso-butyldimethoxysilane, di-t-butyldimethoxysilane, di-n-butyldiethoxysilane, n-butylmethyldimethoxysilane, bis(2-ethylhexyl)dimethoxysilane, bis(2-ethylhexyl)diethoxysilane, dicyclopentyldimethoxysilane, dicyclopentyldiethoxysilane, dicyclohexyldimethoxysilane, dicyclohexyldiethoxysilane, bis(3-methylcyclohexyl)dimethoxysilane, bis(4-methylcyclohexyl)dimethoxysilane, bis(3,5-dimethylcyclohexyl)dimethoxysilane, cyclohexylcyclopentyldimethoxysilane, cyclohexylcyclopentyldiethoxysilane, cyclohexylcyclopentyldipropoxysilane, 3-methylcyclohexylcyclopentyldimethoxysilane, 4-methylcyclohexylcyclopentyldimethoxysilane, 3,5-dimethylcyclohexylcyclopentyldimethoxysilane, 3-methylcyclohexylcyclohexyldimethoxysilane, 4-methylcyclohexylcyclohexyldimethoxysilane, 3,5-dimethylcyclohexylcyclohexyldimethoxysilane, cyclopentylmethyldimethoxysilane, cyclopentylmethyldiethoxysilane, cyclopentylethyldiethoxysilane, cyclopentyl(iso-propyl)dimethoxysilane, cyclopentyl(iso-butyl)dimethoxysilane, cyclohexylmethyldimethoxysilane, cyclohexylmethyldiethoxysilane, cyclohexylethyldimethoxysilane, cyclohexylethyldiethoxysilane, cyclohexyl(n-propyl)dimethoxysilane, cyclohexyl(iso-propyl)dimethoxysilane, cyclohexyl(n-propyl)diethoxysilane, cyclohexyl(iso-butyl)dimethoxysilane, cyclohexyl(n-butyl)diethoxysilane, cyclohexyl(n-pentyl)dimethoxysilane, cyclohexyl(n-pentyl)diethoxysilane, diphenyldimethoxysilane, diphenyldiethoxysilane, phenylmethyldimethoxysilane, phenylmethyldiethoxysilane, phenylethyldimethoxysilane, phenylethyldiethoxysilane, methyltrimethoxysilane, methyltriethoxysilane, ethyltrimethoxysilane, ethyltriethoxysilane, n-propyltrimethoxysilane, iso-propyltrimethoxysilane, n-propyltriethoxysilane, iso-propyltriethoxysilane, n-butyltrimethoxysilane, iso-butyltrimethoxysilane, t-butyltrimethoxysilane, n-butyltriethoxysilane, 2-ethylhexyltrimethoxysilane, 2-ethylhexyltriethoxysilane, cyclopentyltrimethoxysilane, cyclopentyltriethoxysilane, cyclohexyltrimethoxysilane, cyclohexyltriethoxysilane, vinyltrimethoxysilane, vinyltriethoxysilane, phenyltrimethoxysilane, phenyltriethoxysilane, tetramethoxysilane, tetraethoxysilane, tetrapropoxysilane, and tetrabutoxysilane. Either one type of these organosilicon compounds (C) or a combination of two or more types of these compounds can be used.

Olefins are polymerized or copolymerized by random or block copolymerization in the presence of the catalyst for olefin polymerization of the present invention. The olefins such as ethylene, propylene, 1-butene, 1-pentene, 4-methyl-1-pentene, and vinyl cyclohexane can be used either individually or in combination of two or more. Of these, ethylene, propylene, and 1-butene can be suitably used. A particularly preferable olefin is propylene. Propylene may be copolymerized with other olefins. As the olefins to be copolymerized, ethylene, propylene, 1-butene, 1-pentene, 4-methyl-1-pentene, vinyl cyclohexane, and the like can be used either individually or in combination of two or more. Of these, ethylene and 1-butene can be suitably used. As the method for copolymerizing propylene with other olefins, random copolymerization of polymerizing propylene with a small amount of ethylene as a comonomer in one step, and propylene-ethylene block copolymerization of polymerizing only propylene in a first step (first polymerization vessel) and copolymerizing propylene and ethylene in a second step (second polymerization vessel) or in more steps (multiple stage polymerization vessel) can be given as typical methods. The catalyst of the present invention comprising the component (A), component (B), and component (C) is effective in both the random copolymerization and block copolymerization for improving the catalytic activity, stereoregularity, and/or hydrogen response as well as copolymerization performance and properties of resulting copolymers. Alcohols may be added to the polymerization system in order to prevent formation of gel in the finished product, particularly when shifting from homopolymerization of propylene to the block copolymerization. As specific examples of the alcohols, ethyl alcohol and isopropyl alcohol can be given. These alcohols are used in an amount of 0.01 to 10 mol, and preferably 0.1 to 2 mol, for one mol of the component (B).

The ratio of each component used is not specifically limited inasmuch as such a ratio does not influence the effect of the present invention. Usually, the component (B) is used in an amount of 1 to 2,000 mol, and preferably 50 to 1,000 mol per one mol of the titanium atom in the component (A). The component (C) is used in an amount of 0.002 to 10 mol, preferably 0.01 to 2 mol, and particularly preferably 0.1 to 0.5 mol per one mol of the component (B).

Although the order of contact of the components is arbitrarily determined, it is desirable to first add the organoaluminum compound (B) to the polymerization system and then cause the solid catalyst component (A) to come in contact with the organoaluminum compound (B). When the component (C) is used, the organoaluminum compound (B) is first added to the polymerization system, then the component (C) is added, following which the solid catalyst component (A) is caused to come in contact with the mixture. When the components are charged into the polymerization system, it is desirable that olefins such as propylene coexist.

In the present invention, polymerization can be carried out either in the presence or in the absence of an organic solvent. Olefin monomers such as propylene may be used either in a gaseous state or in a liquid state. The polymerization reaction is preferably carried out at a temperature of 200°C or less, and preferably at 100°C or less, under a pressure of 10 MPa or less, and preferably 6 MPa or less. Either a continuous polymerization system or a batch polymerization system may be used for the polymerization reaction. In addition, the polymerization can be completed either in one step or in two or more steps.

In polymerizing olefins using the catalyst formed from the component (A) and the component (B) or the component (C) (hereinafter may be referred to from time to time as "main polymerization"), it is desirable to preliminarily polymerize the olefins prior to the main polymerization to further improve the catalyst activity, stereoregularity, properties of resulting polymer particles, and the like. In addition to the olefins used in the main polymerization, monomers such as styrene can be used in the preliminary polymerization. Specifically, after causing the component (A) to contact the component (B) or the component (C) in the presence of olefins to preliminarily polymerize 0.1 to 100 g of the polyolefins for 1 g of the component (A), the component (B) and/or the component (C) are further caused to contact to form the catalyst.

Although the order of contact of the components and monomers in carrying out the preliminary polymerization is optional, it is desirable to first add the component (B) to the preliminary polymerization system in an inert gas atmosphere or a gas atmosphere such as propylene, cause the component (A) to come in contact with the component (B), and then cause an olefin such as propylene and/or one or more other olefins to come in contact with the mixture. Although not specifically limited, the preliminary polymerization temperature is from -10°C to 70°C, and preferably from 0°C to 50°C.

The polymerization of olefins in the presence of the catalyst for olefin polymerization of the present invention can produce olefin polymers having the higher stereoregularity and the more improved hydrogen response than in the polymerization using a known catalyst.

The present invention will be described in more detail by examples, which should not be construed as limiting the present invention.

Example 1

(Preparation of solid component)

A 2,000 ml round bottom flask equipped with a stirrer, of which the internal atmosphere had been sufficiently replaced with nitrogen gas, was charged with 150 g of diethoxymagnesium and 750 ml of toluene to prepare a suspension. The suspension was added to a solution of 450 ml of toluene and 300 ml of titanium tetrachloride in a 3,000 ml round bottom flask equipped with a stirrer, of which the internal atmosphere had been sufficiently replaced with nitrogen gas. The suspension liquid was reacted at 5°C for one hour. After the addition of 42 ml of n-butyl phthalate, the mixture was heated to 100°C and reacted for two hours while stirring. After the reaction, the resulting reaction mixture was washed four times with 1,300 ml of toluene at 80°C. 600 ml of toluene and 300 ml of titanium tetrachloride were added to the washed product and the mixture was heated to 110°C and reacted for two hours while stirring. The intermediate washing and the secondary treatment were repeated once more. The resulting reaction mixture was washed seven times with 1,000 ml of heptane at 40°C, filtered, and dried to obtain a solid component in the form of a powder. The content of titanium in the solid component was measured and found to be 3.1 wt%.

<Preparation of solid catalyst component>

30 g of the solid component obtained above was suspended in 300 ml of heptane, 30 mmol of diallyldimethylsilane was added to the suspension, and the mixture was reacted at 30°C for two hours while stirring. The resulting reaction mixture was washed twice with 300 ml of heptane at 40°C, filtered, and dried to obtain a solid catalyst component in the form of a powder. The solid catalyst component was analyzed to find that the content of titanium was 2.5 wt%, the content of a magnesium atom was 20 wt%, and the content of a chlorine atom was 65 wt%. The content of the organosilicon compound was analyzed by gas chromatography to find that the diallyldimethylsilane was contained as a polymer and the content of silicon was 1.7 wt%.

<Preparation of polymerization catalyst and polymerization>

A 2.01 autoclave equipped with a stirrer, of which the internal atmosphere had been entirely replaced with nitrogen gas, was charged with 1.32 mmol of triethylaluminum, 0.09 mmol of cyclohexylmethyldimethoxysilane, and the above solid catalyst component in an amount, in terms of the titanium atom contained therein, of 0.0018 mmol, thereby forming a polymerization catalyst. Then, with the addition of 1.51 of hydrogen gas and 1.41 of liquified propylene, preliminary polymerization was carried out for five minutes at 20°C, following which the preliminary polymerization product was heated and main polymerization was carried out for one to three hours at 70°C. The catalytic activity, the boiling heptane insoluble components (HI, wt%), the melt flow rate (MI, g-PP/10 min), and the xylene-soluble components at 23°C (XS, wt%) of the resulting polymer obtained by polymerization for one hour were measured. The results are shown in Table 1.

The catalytic activity per gram of the solid catalyst component for the amount of polymer (F) (g) per one hour, two hours, and three hours of polymerization was calculated using the following formula.

Catalyst activity = formed polymer (F) g/solid catalyst component g

The polymer was continuously extracted with boiling n-heptane for six hours. An n-heptane-insoluble polymer (G) was dried and the weight was measured. The ratio of the boiling heptane insoluble (HI, wt%) in the polymer was calculated by the following formula.

$$\text{HI (wt\%)} = (G) \text{ g}/(F) \text{ g} \times 100$$

The xylene-soluble components (XS, wt%) of the polymer was determined as follows.

Method for measuring xylene soluble components: 4.0 g of the polymer was added to 200 ml of p-xylene and dissolved while maintaining the mixture at the boiling point of toluene (138°C) over two hours. The mixture was cooled to 23°C and the soluble components were separated from the insoluble components by filtration. After evaporating the solvent from the soluble components, the residue was dried with heating to obtain a polymer as the xylene-soluble components, of which the amount (XS, wt%) was indicated by the relative value for the amount (F) of the obtained polymer.

The melt index (MI) which indicates the melt flow rate of the polymer was determined according to the methods conforming to ASTM D1238 and JIS K7210.

Example 2

A solid catalyst component was prepared, a polymerization catalyst was formed, and polymerization was carried out in the same manner as in Example 1, except that triallylmethylsilane was used instead of diallyldimethylsilane. The results are shown in Table 1. The solid catalyst component was analyzed to find that the titanium content was 2.7 wt%, triallylmethylsilane was contained as a monomer and a polymer, and the content of silicon was 1.6 wt%.

Example 3

A solid catalyst component was prepared, a polymerization catalyst was formed, and polymerization was carried out in the same manner as in Example 1, except that diallyldichlorosilane was used instead of diallyldimethylsilane. The results are shown in Table 1. The solid catalyst component was analyzed to find that the titanium content was 2.8 wt%, diallyldichlorosilane was contained as a polymer, and the content of silicon was 1.8 wt%.

Example 4

A solid catalyst component was prepared, a polymerization catalyst was formed, and polymerization was carried out in the same manner as in Example 1, except that allyldimethylvinylsilane was used instead of diallyldimethylsilane. The results are shown in Table 1. The solid catalyst component was analyzed to find that the titanium content was 2.7 wt%, diallyldimethylvinylsilane was contained as a polymer, and the content of silicon was 1.5 wt%.

Example 5

A solid catalyst component was prepared, a polymerization catalyst was formed, and polymerization was carried out in the same manner as in Example 1, except that vinyltrimethylsilane was used instead of diallyldimethylsilane. The results are shown in Table 1. The solid catalyst component was analyzed to find that the titanium content was 2.7 wt%, vinyltrimethylsilane was contained as a monomer and a polymer, and the content of silicon was 1.4 wt%.

Example 6

A solid catalyst component was prepared, a polymerization catalyst was formed, and polymerization was carried out in the same manner as in Example 1, except that divinyldichlorosilane was used instead of diallyldimethylsilane. The results are shown in Table 1. The solid catalyst component was analyzed to find that the titanium content was 2.6 wt%, divinyldichlorosilane was contained as a monomer and a polymer, and the content of silicon was 1.6 wt%.

Example 7

A solid catalyst component was prepared, a polymerization catalyst was formed, and polymerization was carried out in the same manner as in Example 1, except that i-butyl phthalate was used instead of n-butyl phthalate. The results are shown in Table 1. The solid catalyst component was analyzed to find that the titanium content was 3.1 wt%, diallyldimethylsilane was contained as a polymer, and the content of silicon was 1.7 wt%.

Example 8

A solid catalyst component was prepared, a polymerization catalyst was formed, and polymerization was carried out in the same manner as in Example 1, except that diethyl di-i-butyl malonate was used instead of n-butyl phthalate. The results are shown in Table 1. The solid catalyst component was analyzed to find that the titanium content was 3.8 wt%, diallyldimethylsilane was contained as a polymer, and the content of silicon was 1.3 wt%.

Example 9

(Preparation of solid component)

A 1,000 ml round bottom flask equipped with a stirrer, of which the internal atmosphere had been sufficiently replaced with nitrogen gas, was charged with 32 g of magnesium turnings for Grignard reagent. A mixed solution containing 120 g of butylchloride and 500 ml of dibutyl ether was added dropwise to the magnesium at 50°C over four hours and reacted at 60°C for one hour. After the reaction, the solution was cooled to room temperature, and the solid was removed by filtration to obtain a magnesium compound solution. A 500 ml round bottom flask equipped with a stirrer, of which the internal atmosphere had been sufficiently replaced with nitrogen gas, was charged with 240 ml of hexane, 5.4 g of tetrabuthoxy titanium, and 61.4 g of tetraethoxysilane to obtain a homogeneous solution. 150 ml of the magnesium compound solution was added dropwise to the homogeneous solution and reacted at 5°C for four hours. The mixture was then stirred at room temperature for one hour. The resulting reaction mixture was filtered at room temperature to remove the liquid. The solid was washed eight times with 240 ml of hexane, and dried under reduced pressure to obtain a solid product. 8.6 g of the solid product was put into a 100 ml round bottom flask equipped with a stirrer, of which the internal atmosphere had been sufficiently replaced with nitrogen gas. 48 ml of toluene and 5.8 ml of diisobutyl phthalate were further added and reacted at 95°C for one hour. After removing the liquid by filtration, the solid was washed eight times with 85 ml of toluene. After washing, a flask was charged with 21 ml of toluene, 0.48 ml of diisobutyl phthalate, and 12.8 ml of titanium tetrachloride. The mixture was reacted at 95°C for eight hours. After the reaction, the solid was separated from the liquid at 95°C, washed twice with 48 ml of toluene, and again treated with a mixture of diisobutyl phthalate and titanium tetrachloride under the same conditions as above. The resulting solid was washed eight times with 48 ml of hexane, filtered, and dried to obtain a solid component in the form of a powder. The content of titanium in the solid component was measured and found to be 2.5 wt%.

<Preparation of solid catalyst component>

A solid catalyst component was prepared in the same manner as in Example 1 except for using the solid component obtained above. The solid catalyst component was analyzed to find that the titanium content was 2.1 wt%, diallyldimethylsilane was contained as a polymer, and the content of silicon was 1.6 wt%.

<Preparation of polymerization catalyst and polymerization>

A polymerization catalyst was prepared and polymerization was carried out in the same manner as in Example 1, except for using the solid catalyst component prepared above. The results are shown in Table 1.

Example 10

(Preparation of solid component)

A 500 ml round bottom flask equipped with a stirrer, of which the internal atmosphere had been sufficiently replaced with nitrogen gas, was charged with 4.76 g of anhydrous magnesium chloride, 25 ml of decane, and 23.4 ml of 2-ethylhexyl alcohol. The mixture was reacted at 130°C for two hours, thereby obtaining a homogeneous solution. 1.11 g of phthalic acid anhydride was added to the homogeneous solution and reacted at 130°C for one hour. The resulting reaction solution was added dropwise over one hour to 200 ml of titanium tetrachloride maintained at -20°C in another 500 ml round bottom flask equipped with a stirrer, of which the internal atmosphere had been sufficiently replaced with nitrogen gas. After heating the solution to 110°C over four hours, 2.68 ml of diisobutyl phthalate was added and reacted for two hours. After the reaction, the liquid was removed by filtration and the solid was washed with decane and hexane at 110°C until no free titanium compound was detected. The solid was then filtered and dried, thereby obtaining a solid component in a form of a powder. The content of titanium in the solid component was measured and found to be 3.1 wt%.

<Preparation of solid catalyst component>

A solid catalyst component was prepared in the same manner as in Example 1 except for using the solid component obtained above. The solid catalyst component was analyzed to find that the titanium content was 2.7 wt%, diallyldimethylsilane was contained as a polymer, and the content of silicon was 1.4 wt%.

<Preparation of polymerization catalyst and polymerization>

A polymerization catalyst was prepared and polymerization was carried out in the same manner as in Example 1, except for using the solid catalyst component prepared above. The results are shown in Table 1.

Example 11

<Preparation of solid catalyst component>

30 g of the solid component obtained in Example 1 was suspended in 300 ml of heptane, and 30 mmol of diallyldimethylsilane was added to the suspension. The mixture was contacted at 30°C for two hours while stirring, thereby obtaining a solid catalyst component. The solid catalyst component was analyzed to find that the titanium content was 2.5 wt%, diallyldimethylsilane was contained as a monomer and a polymer, and the content of a silicon atom was 2.2 wt%.

<Preparation of polymerization catalyst and polymerization>

A polymerization catalyst was prepared and polymerization was carried out in the same manner as in Example 1, except for using the solid catalyst component prepared above. The results are shown in Table 1.

Example 12

<Preparation of polymerization catalyst and polymerization>

A 1,800 ml stainless-steel autoclave equipped with a stirrer, of which the internal atmosphere had been sufficiently dried with nitrogen gas and then replaced with propylene gas, was charged with 700 ml of n-heptane. 2.10 mmol of triethylaluminum, 0.21 mmol of cyclohexylinethyldimethoxysilane, and the solid catalyst component prepared in Example 1 in an amount, in terms of the titanium atom contained therein, of 0.0053 mmol, were added while maintaining the atmosphere of the propylene gas, thereby forming a polymerization catalyst. Then, the preliminary polymerization was carried out under a propylene pressure of 0.1 MPa at 20°C for 30 minutes while stirring. Then, 5.4 mmol of hydrogen was added, and the polymerization was continued under a propylene pressure of 0.6 MPa in the system at 70°C for one to three hours. The pressure during polymerization which decreases as the polymerization progresses was kept at the same level by continuously supplying only propylene. The propylene was polymerized by the above polymerization method, and the produced polymer was filtered and dried under reduced pressure to obtain a solid polymer. Separately, a polymer dissolved in the polymerization solvent was obtained by concentrating the filtrate. The amount of the polymer is referred to as (M) and the amount of the solid polymer is referred to as (N). A polymer insoluble in n-heptane was obtained by extracting the polymer which was polymerized for one hour with boiling n-heptane for six hours. The amount of the polymer is referred to as (P). The polymerization activity (Y) per solid catalyst component is shown by the following formula.

$$(Y) = [(M) + (N)](g)/\text{amount of solid catalyst component (g)}$$

The total polymer insoluble in n-heptane (HI) is shown by the following formula.

$$(HI) = \{(P)(g)/[(M) + (N)](g)\} \times 100$$

Furthermore, MI of the polymer which was polymerized for one hour was measured. The results are shown in Table 1.

Example 13

<Preparation of polymerization catalyst and polymerization>

A 2.0 autoclave equipped with a stirrer, of which the internal atmosphere had been entirely replaced with nitrogen gas, was charged with 2.20 mmol of triethylaluminum, 0.083 mmol of cyclohexylmethyldimethoxysilane, and the solid catalyst component obtained in Example 1 in an amount, in terms of the titanium atom contained therein, of 0.0055 mmol, thereby forming a polymerization catalyst. Then, the preliminary polymerization was carried out under a hydrogen pressure of 0.007 MPa and a propylene pressure of 0.1 MPa at 20°C for 10 minutes while stirring. The temperature was increased to 80°C and polymerization was carried out under a propylene pressure of 2.8 MPa at 80°C for one to three hours. The catalyst activity, XS, and MI of the polymer obtained by the polymerization for one hour were measured. The results are shown in Table 1. Only the catalyst activity was calculated for the polymers which were polymerized for two hours and three hours. The results are shown in Table 1.

Comparative Example 1

A polymerization catalyst was formed and polymerization was carried out in the same manner as in Example 1, except that the solid component was used instead of the solid catalyst component. The results are shown in Table 1.

Comparative Example 2

<Preparation of solid catalyst component>

30 g of the solid component obtained in Example 1 was suspended in 300 ml of heptane, 30 mmol of vinyltrimethylsilane was added to the suspension, and the mixture was reacted at 30°C for one hour. After the reaction, the resulting reaction solution was cooled to 15°C. 90 mmol of triethylaluminum diluted with heptane was added dropwise over 30 minutes and the mixture was reacted while stirred at 30°C for two hours. Next, the resulting reaction mixture was washed seven times with 300 ml of heptane at 30°C to obtain a solid catalyst component.

<Preparation of polymerization catalyst and polymerization>

A polymerization catalyst was prepared and polymerization was carried out in the same manner as in Example 1, except for using the solid catalyst component prepared above. The results are shown in Table 1. The solid catalyst component was analyzed to find that the titanium content was 2.7 wt%, vinyltrimethylsilane was contained as a monomer, and the content of silicon was 1.8 wt%.

Comparative Example 3

A polymerization catalyst was formed and polymerization was carried out in the same manner as in Example 9, except that the solid component was used instead of the solid catalyst component. The results are shown in Table 1.

Comparative Example 4

A polymerization catalyst was formed and polymerization was carried out in the same manner as in Example 10, except that the solid component was used instead of the solid catalyst component. The results are shown in Table 1.

It can be seen from the above results that, by using the solid catalyst component of the present invention, the catalyst activity is excellently maintained and polymers with high stereoregularity can be provided at a high yield.

TABLE 1

| | | Compound (iii) | Compound (b) | Polymerization activity k g-PP/g-cat. | | | HI wt% | MI g/10 min | xs wt% |
|---|---|---|---|---|---|---|---|---|---|
| | | | | 1 hour | 2 hours | 3 hours | | | |
| Example | 1 | Di-n-butyl phthalate | Diallyldimethylsilane | 41.7 | 78.9 | 114.6 | 98.6 | 8 | 1.4 |
| | 2 | Di-n-butyl phthalate | Triallylmethylsilane | 45.0 | 76.5 | 103.5 | 98.4 | 10 | 1.8 |
| | 3 | Di-n-butyl phthalate | Diallyldichlorosilane | 36.0 | 63.0 | 88.1 | 98.0 | 8 | 1.9 |
| | 4 | Di-n-butyl phthalate | Allyldimethylvinylsilane | 51.4 | 85.9 | 116.0 | 98.6 | 8 | 1.4 |
| | 5 | Di-n-butyl phthalate | Vinyltrimethylsilane | 56.0 | 89.8 | 120.2 | 98.2 | 7 | 1.9 |
| | 6 | Di-n-butyl phthalate | Divinyldichlorosilane | 40.3 | 70.5 | 102.5 | 97.8 | 11 | 2.1 |
| | 7 | Di-i-butyl phthalate | Diallyldimethylsilane | 40.5 | 79.6 | 116.4 | 98.2 | 12 | 1.8 |
| | 8 | Di-i-butyl diethylmalonate | Diallyldimethylsilane | 36.7 | 72.2 | 107.3 | 97.2 | 25 | 2.5 |
| | 9 | Di-i-butyl phthalate | Diallyldimethylsilane | 37.0 | 64.4 | 86.1 | 98.2 | 14 | 2.4 |
| | 10 | Di-i-butyl phthalate | Diallyldimethylsilane | 38.3 | 66.5 | 90.8 | 97.9 | 13 | 2.6 |
| | 11 | Di-n-butyl phthalate | Diallyldimethylsilane | 45.3 | 81.5 | 117.9 | 98.8 | 5 | 1.2 |
| | 12 | Di-n-butyl phthalate | Diallyldimethylsilane | 13.1 | 25.5 | 37.6 | 99.0 | 4 | - |
| | 13 | Di-n-butyl phthalate | Diallyldimethylsilane | 20.9 | 40.8 | 77.4 | - | 9 | 1.5 |
| Comparative Example | 1 | Di-n-butyl phthalate | - | 40.5 | 60.4 | 76.3 | 99.0 | 5 | 1.3 |
| | 2 | Di-n-butyl phthalate | Vinyltrimethylsilane | 28.9 | 43.5 | 58.2 | 94.3 | 26 | 6.0 |
| | 3 | Di-i-butyl phthalate | - | 32.1 | 49.2 | 64.2 | 98.3 | 7 | 1.5 |
| | 4 | Di-i-butyl phthalate | - | 34.6 | 53.0 | 70.0 | 98.2 | 8 | 1.7 |

INDUSTRIAL APPLICABILITY

A catalyst for polymerization of olefins of the present invention is capable of maintaining higher stereoregularity and yield of a polymer than the known catalyst and is excellent in maintaining activity with a minimum decrease of catalyst activity during the polymerization. Thus, the catalyst is able to produce polyolefins for common use at a low cost, and is also useful in the manufacture of olefin polymers having high functions.

**Claims**

1. A solid catalyst component for polymerization of olefins containing magnesium, titanium, a halogen atom, and an organosilicon compound shown by the following formula (1),

$$[CH_2=CH-(CH_2)_n]_q SiR^1_{4-q} \qquad (1)$$

wherein $R^1$ individually represents a hydrogen atom, an alkyl group having 1 to 20 carbon atoms, a cycloalkyl group, a phenyl group, a vinyl group, or a halogen atom, n is 0 or an integer of 1 to 5, and q is an integer of 1 to 4, provided that when q is 1, at least one of $R^1$s is an alkyl group having 2 to 20 carbon atoms, a cycloalkyl group, a phenyl group, a vinyl group, or a halogen atom; or a polymer of the organosilicon compound.

2. The solid catalyst component for polymerization of olefins according to claim 1, further containing an electron donor compound.

3. A solid catalyst component for polymerization of olefins obtained by contacting a solid component (a) containing magnesium, titanium, and a halogen atom with an organosilicon compound (b) shown by the following formula (1),

$$[CH_2=CH-(CH_2)_n]_q SiR^1_{4-q} \qquad (1)$$

wherein $R^1$ individually represents a hydrogen atom, an alkyl group having 1 to 20 carbon atoms, a cycloalkyl group, a phenyl group, a vinyl group, or a halogen atom, n is 0 or an integer of 1 to 5, and q is an integer of 1 to 4, provided that when q is 1, at least one of $R^1$s is an alkyl group having 2 to 20 carbon atoms, a cycloalkyl group, a phenyl group, a vinyl group, or a halogen atom.

4. The solid catalyst component for polymerization of olefins according to claim 3, wherein the solid component (a) further contains an electron donor compound.

5. The solid catalyst component for polymerization of olefins according to claim 3, wherein the solid component (a) is prepared by contacting a magnesium compound (i), a titanium compound (ii), and an electron donor compound (iii).

6. The solid catalyst component for polymerization of olefins according to claim 3, wherein the solid component (a) is prepared by contacting a magnesium compound (i), a titanium compound (ii), an electron donor compound (iii), and an aromatic hydrocarbon compound (iv).

7. The solid catalyst component for polymerization of olefins according to claim 5 or 6, wherein the magnesium compound (i) is a dialkoxymagnesium.

8. The solid catalyst component for polymerization of olefins according to claim 5 or 6, wherein the titanium compound (ii) is a titanium tetrachloride.

9. The solid catalyst component for polymerization of olefins according to claim 5 or 6, wherein the electron donor compound (iii) is a phthalic acid diester or a derivative thereof.

10. The solid catalyst component for polymerization of olefins according to claim 3, wherein the organosilicon compound (b) is a diallyldialkylsilane.

11. A catalyst for polymerization of olefins formed from the solid catalyst component (A) according to any one of claims 1 to 10 and an organoaluminum compound shown by the following formula (2),

$$R^2{}_r AlQ_{3-r} \qquad (2)$$

wherein $R^2$ represents an alkyl group having 1 to 4 carbon atoms, Q represents a hydrogen atom or a halogen atom, and r represents a real number satisfying the formula $0 < p \leq 3$.

12. A process for producing an olefin polymer comprising polymerizing olefins in the presence of the catalyst for polymerization of olefins according to claim 11.

13. The process for producing an olefin polymer according to claim 12, wherein the olefin is propylene.

Figure 1

(A) Transition metal component
   (a) Magnesium Compound ————————————
      Titanium Conpound ————————————
      Electron-Donating Compound————————————        Contact

   (b) Organosilicon Compound
      $[CH_2=CH-(CH_2)_n]_q \ Si \ R^1_{4-q}$————————————        Olefin

(C) Organic Alminum Component ————————————
   $R^2_r Al \ Q_{3-r}$
   $0 < r \leqq 3$

<table>
<tr><td colspan="2" align="center">**INTERNATIONAL SEARCH REPORT**</td><td>International application No.<br>PCT/JP2006/317391</td></tr>
</table>

A. CLASSIFICATION OF SUBJECT MATTER
*C08F4/656(2006.01)i*

According to International Patent Classification (IPC) or to both national classification and IPC

B. FIELDS SEARCHED

Minimum documentation searched (classification system followed by classification symbols)
C08F4/656

Documentation searched other than minimum documentation to the extent that such documents are included in the fields searched
Jitsuyo Shinan Koho      1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| P,X | JP 2006-199737 A  (Toho Catalyst Co., Ltd.),<br>03 August, 2006 (03.08.06),<br>Claims<br>& JP 2006-169283 A    & WO 2006/064718 A1 | 1-13 |
| X | JP 2004-263076 A  (Japan Polypropylene Corp.),<br>24 September, 2004 (24.09.04),<br>Claims; Par. Nos. [0023] to [0024]<br>(Family: none) | 1-13 |
| X | JP 2003-292523 A  (Japan Polychem Corp.),<br>15 October, 2003 (15.10.03),<br>Claims; Par. Nos. [0036] to [0037]<br>(Family: none) | 1-13 |

☒ Further documents are listed in the continuation of Box C.      ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered   to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>24 November, 2006 (24.11.06) | Date of mailing of the international search report<br>05 December, 2006 (05.12.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/317391 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2003-292522 A  (Japan Polychem Corp.), 15 October, 2003 (15.10.03), Claims; Par. Nos. [0024] to [0025] (Family: none) | 1-13 |
| X | JP 04-293910 A  (Mitsubishi Petrochemical Co., Ltd.), 19 October, 1992 (19.10.92), Claims; Par. Nos. [0052] to [0054] (Family: none) | 1-13 |
| X | JP 03-234707 A  (Mitsubishi Petrochemical Co., Ltd.), 18 October, 1991 (18.10.91), Claims; page 8, lower left column to lower right column & US 5147839 A1          & EP 441620 A2 | 1-13 |
| X | JP 01-278502 A  (Chisso Corp.), 08 November, 1989 (08.11.89), Claims (Family: none) | 1-13 |
| X | JP 07-002923 A  (Mitsubishi Petrochemical Co., Ltd.), 06 January, 1995 (06.01.95), Claims; Par. Nos. [0037] to [0038] (Family: none) | 1-13 |
| X | JP 07-025927 A  (Mitsubishi Petrochemical Co., Ltd.), 27 January, 1995 (27.01.95), Claims; Par. No. [0019] (Family: none) | 1-13 |

Form PCT/ISA/210 (continuation of second sheet) (April 2005)

**EP 1 921 093 A1**

**REFERENCES CITED IN THE DESCRIPTION**

**Patent documents cited in the description**

- JP 57063310 A
- JP 57063311 A
- JP 3234707 A
- JP 58004132 A
- JP 62051633 A
- JP 3074341 A
- JP 4368391 A
- JP 8073388 A